**Europäisches Patentamt**

**European Patent Office**

**Office européen des brevets**

Veröffentlichungsnummer: **0 296 467**

**A2**

# EUROPÄISCHE PATENTANMELDUNG

Anmeldenummer: **88109502.0**

Anmeldetag: **15.06.88**

Int. Cl.4: **G02B 6/42 , G02B 6/36**

Priorität: **22.06.87 DE 8708660 U**

Veröffentlichungstag der Anmeldung:
**28.12.88 Patentblatt 88/52**

Benannte Vertragsstaaten:
**CH DE FR GB LI**

Anmelder: **Schott Glaswerke**
**Hattenbergstrasse 10**
**D-6500 Mainz(DE)**

**CH DE FR LI**

Anmelder: **CARL-ZEISS-STIFTUNG**
**Schott Glaswerke Hattenbergstrasse 10**
**D-6500 Mainz 1(DE)**

**GB**

Erfinder: **Schönborn, Karl-Heinz**
**Finthener Landstrasse 2**
**D-6500 Mainz(DE)**
Erfinder: **Eis, Wolfgang**
**Hauptstrasse 141**
**D-6239 Eppstein 2(DE)**
Erfinder: **Kuntze, Petra**
**Tennweg 2**
**D-6270 Idstein(DE)**
Erfinder: **Weiler, Wolfgang**
**Bahnhofstrasse 14**
**D-6551 Bretzenheim(DE)**

Vertreter: **Schmitz, Waldemar, Dipl.-Phys.**
**Lessingstrasse 10**
**D-6200 Wiesbaden(DE)**

Lichtleiter-Einkopplungsvorrichtung für einen Laserkopf.

Das schnelle und bequeme Anschließen einer Lichtleitfaser an den Eink opplungsort eines Laserkopfes wird über eine Steckverbindung erreicht. Die Steckverbindung besteht aus einem Stecker, der die Lichtleitfaser aufnimmt und einer Einsteckbuchse am Laserkopf. Der Stecker besitzt an seinem freien Ende ein genau bemessenes Paßstück, in dem ein Eintrittsquerschnitt der Lichtleitfaser mit fester Orientierung angeordnet ist. Die richtige Einkopplungsposition des Steckers in Bezug auf den Einkopplungsort des Laserkopfes wird durch eine im Laserkopf geschützt angeordnete Spanneinrichtung erzielt, die nur einmal justiert werden muß. Ein mit der Spanneinrichtung gekoppelter Sicherheitsschalter verhindert das Einhalten des Lasers vor der vollständigen Kopplung von Stecker und Laserkopf.

Fig. 3

## Lichtleiter-Einkopplungsvorrichtung für einen Laserkopf

Die Erfindung betrifft eine Einkopplungsvorrichtung zum Anschließen einer Lichtleitfaser an einen Einkopplungsort eines Laserkopfes.

Gewöhnlich hat der Einkopplungsort nur sehr kleine Abmessungen, so daß das Einkoppeln einer entsprechend dünnen Lichtleitfaser eine hohe Positionsgenauigkeit erfordert. Wenn beispielsweise der Einkopplungsort ein von einem Linsensystem definierter Brennfleck von typischerweise 170 $\mu$m Durchmesser ist und der Kern der Lichtleitfaser einen Durchmesser von 200 $\mu$m hat, sollte die Positionierung auf etwa ± 15 $\mu$m genau sein, um den Laser-Energiestrom vollständig in die Lichtleitfaser einzukoppeln. Größere Lage-Ungenauigkeiten können dazu führen, daß die Fassung der Lichtleitfaser beschädigt oder zerstört wird.

Wegen der geforderten hohen Positioniergenauigkeit wird nach dem Stand der Technik das Eintrittsende der Lichtleitfaser fest im Laserkopf eingebaut und beim Einbau justiert. Ein Abtrennen der Lichtleitfaser und ein erneuter Zusammenbau ist dann umständlich und zeitraubend, vor allem wegen der jedesmal erforderlichen neuen Justierung.

Die Erfindung geht von der Aufgabe aus, eine Einkopplungsvorrichtung der genannten Art so auszubilden, daß ein Abtrennen und wieder Einkoppeln der Lichtleitfaser rascher und bequemer vor sich gehen kann.

Nach der Erfindung wird diese Aufgabe gelöst mit einer Einkopplungsvorrichtung der eingangs genannten Art, die gekennzeichnet ist durch eine Steckverbindung, die einen die Lichtleitfaser fassenden Stecker und einen in dem Laserkopf vorgegebenen Einsteckpfad für den Stecker aufweist, wobei der Stecker an seinem freien Ende ein genau bemessenes Paßstück aufweist, in dem ein Eintrittsquerschnitt der Lichtleitfaser mit fester Orientierung zu dem Paßstück angeordnet ist, wobei ferner zwischen dem Paßstück und dem Einsteckpfad ein zum genauen Positionieren des Paßstücks relativ zu dem Einkopplungsort ausreichendes Spiel vorgesehen ist und wobei schließlich der Laserkopf eine durch Einstecken des Steckers betätigbare Spanneinrichtung aufweist, die bei voll eingestecktem Stecker das Paßstück in der richtigen Einkopplungsposition festlegt.

Bei der erfindungsgemäßen Einkopplungsvorrichtung wird die richtige Einkopplungsposition des Steckers allein durch die innerhalb des Laserkopfs und somit geschützt angeordnete und nur einmal zu justierende Spanneinrichtung erzielt, so daß der Stecker, der Einsteckpfad und eine zweckmäßigerweise vorgesehene Rasteinrichtung, die den Stecker in der vollständig eingesteckten Position hält, Toleranzen aufweisen dürfen und als einfache und kostengünstige Bauteile ausgeführt sein können.

Vorzugsweise ist ferner ein mit der Betätigung der Spanneinrichtung gekoppelter Sicherheitsschalter vorgesehen, der verhindert, daß der Laser eingeschaltet wird, ohne daß der Stecker vollständig eingesteckt und in der richtigen Einkopplungsposition festgelegt ist.

Die Erfindung sowie Ausgestaltungen der Erfindung und deren Vorteile werden im folgenden anhand von Ausführungsbeispielen in Verbindung mit den Zeichnungen näher beschrieben.

Figur 1 zeigt einen schematischen Axialschnitt durch einen Stecker einer erfindungsgemäßen Einkopplungsvorrichtung.

Figur 2 ist eine schematische, teilweise geschnittene Draufsicht auf eine erfindungsgemäße Einkopplungseinrichtung mit eingestecktem Stecker.

Figur 3 ist eine etwa der Figur 2 entsprechende, teilweise geschnittene Darstellung zur Erläuterung des Einsteckvorganges, wobei der oberhalb der Linie 57 liegende Teil der Figur 3 den Stecker in voll eingestecktem, aber noch nicht endgültig positioniertem Zustand zeigt, während der unterhalb der Linie 57 liegende Teil der Figur 3 den endgültig positionierten Zustand zeigt.

In den Figuren werden ungeachtet baulicher Unterschiede für gleich wirkende Teile gleiche Bezugszeichen verwendet.

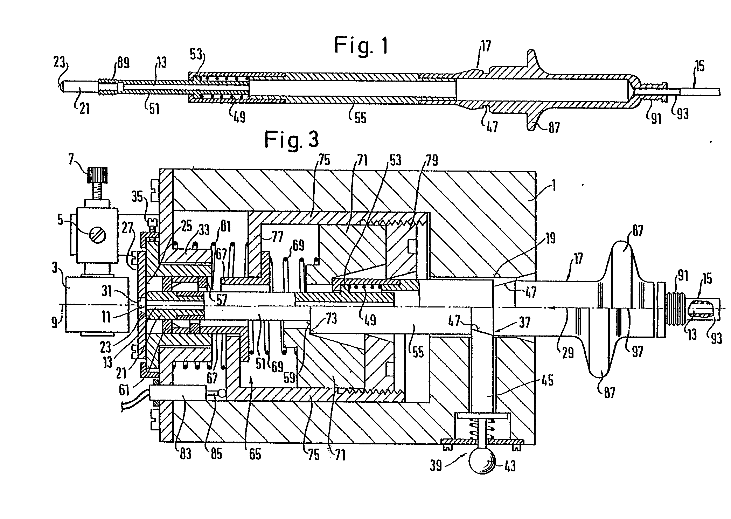

In einem Laserkopf 1 wird von einem Linsensystem, das mit Justierschrauben 5, 7 in zwei zu einer optischen Achse 9 rechtwinkligen Koordinatenrichtungen justierbar ist, ein Brennfleck definiert, der einen Ankopplungsort 11 für einen Eintrittsquerschnitt des Kerns (Figur 1) einer Lichtleitfaser 15 darstellt. In den Figuren ist die Dicke des Kerns der Lichtleitfaser der Deutlichkeit halber übertrieben dargestellt. Zum Einkoppeln der Lichtleitfaser 15 dient eine Steckverbindung mit einem Stecker 17 und einem in dem Laserkopf 1 vorgegebenen Einsteckpfad 19 für den Stecker 17. Der Stecker 17 hat an seinem freien Ende ein genau bemessenes zylindrisches Paßstück 21, in welchem der Eintrittsquerschnitt der Lichtleitfaser mit fester Orientierung zu dem Paßstück 21 angeordnet ist. Bei der dargestellten Ausführungform ist der Eintrittsquerschnitt in der freien Stirnfläche des zylindrischen Paßstücks 21 vorgesehen, so daß es auf die Drehlage des Steckers um die Achse 9 nicht ankommt. Die Stirnfläche ist auf optische Qualität plan geschliffen und poliert.

Das Paßstück 21 hat (Figuren 1 und 3) eine den Eintrittsquerschnitt umgebende ringförmige Anschlagfläche 23, die bei vollständig eingestecktem Stecker an einer planen und mit optischer Qualität geschliffenen Gegenfläche 25 (Figur 3) eines in dem Laserkopf 1 vorgesehenen Gegenstücks 27 anliegt und dadurch die Position des Eintrittsquerschnitts in der Einsteckrichtung 29 bestimmt. Das Gegenstück 27 ist eine verhältnismäßig dünne Platte mit einem Strahldurchtrittsloch 31 (Figur 3), das etwas größer als der Querschnitt des Kerns 13 der Lichtleitfaser 15 ist, so daß der Strahlengang nicht behindert wird. Zur Positionierung des Paßstücks 21 quer zu der Einsteckrichtung 29 ist eine Spanneinrichtung 33 vorgesehen, die mit dem Gegenstück 27 verbunden und an dem Laserkopf 1 quer zu der optischen Achse 9 mittels Justiereinrichtungen 35 in zwei zu der optischen Achse 9 senkrechten Koordinatenrichtungen justierbar ist.

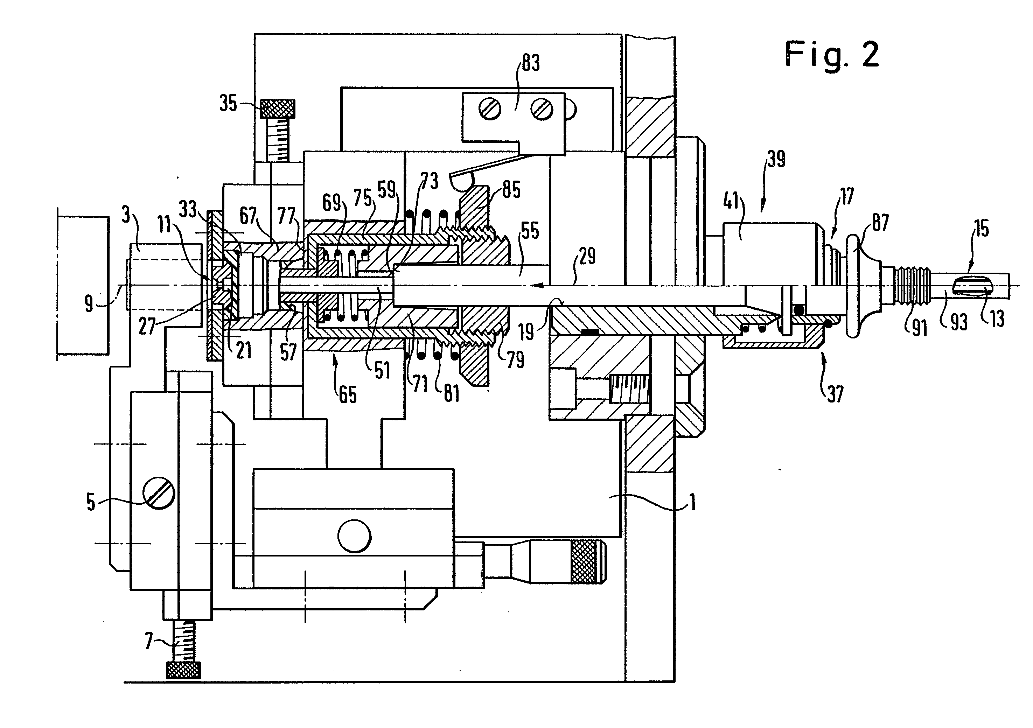

Um den Stecker 17 in der vollständig eingesteckten Stellung zu halten, ist an dem Stecker 17 und an dem Laserkopf eine Rasteinrichtung 37 vorgesehen. Um ein unbeabsichtigtes Lösen des Steckers zu verhindern, ist eine gesondert betätigbare Entrastungseinrichtung 39 vorgesehen. Bei der Ausführungsform nach Figur 2 hat die Entrastungseinrichtung 39 eine Schiebehülse 41, bei der Ausführungsform nach Figur 3 einen Handknopf 43, mit dem ein federbelasteter Rastriegel 45 von Hand aus einer Umfangs-Rastnut 47 des Steckers 17 herausgezogen werden kann.

Das zum Justieren des Paßstücks 21 erforderliche Spiel kann in verschiedener Weise vorgesehen werden. Bei den dargestellten Ausführungsformen bildet zu diesem Zweck das Paßstück 21 einen in dem erforderlichen Ausmaß beweglichen Teil des Steckers 17. Das ist baulich sehr einfach möglich. Zweckmäßigerweise ist das Paßstück 21 entgegen der Einsteckrichtung 29 gegen eine Feder 49 (Figuren 1 und 3) relativ zu den übrigen Teilen des Steckers 17 abgestützt. Bei den dargestellten Ausführungsformen ist zu diesem Zweck das Paßstück 21 an einem Halterohr 51 angebracht, das mittels eines Anschlages 53 (Figuren 1 und 3) in einem hülsenförmigen Endteil eines Stecker-Hauptteils 55 gehalten ist. Die Feder 49 liegt zwischen dem Anschlag 53 und einer Stirnfläche des Stecker-Hauptteils 55 (Figuren 1 und 3) und ist vorgespannt. Dabei ist genügend Spiel zwischen dem Halterohr 51 und dem Stecker-Hauptteil 55 freigelassen, um das erforderliche Spiel des Paßstücks 21 auch quer zur Einsteckrichtung 29 sicherzustellen. Durch die in Einsteckrichtung 29 mögliche Relativbewegung zwischen dem Paßstück 21 und den übrigen Teilen des Steckers 17 ist es möglich, die Betätigung der Spanneinrichtung 33 durch eine über den Anschlag des Paßstücks 21 an dem Gegenstück 27 hinausgehende Weiterbewegung des Steckers 17 in der Einsteckrichtung 29 zu bewirken. Demgemäß hat bei den dargestellten Ausführungsformen die Spanneinrichtung 33 eine in der Einsteckrichtung 29 federnd betätigbare Steuerfläche 57, und der Stecker 17 hat eine damit zusammenwirkende Steuer-Anschlagfläche 59, wobei wegen der Rotationssymmetrie um die Achse 9 beide Flächen 57, 59 als Ringflächen ausgebildet sind.

Die Spanneinrichtung 33 ist bei den dargestellten Ausführungsformen als eine an sich bekannte Spannzange ausgebildet und hat (Figur 3) eine feste winklige oder gerundete Backe 61 und eine quer zu der Einsteckrichtung 29 bewegliche Backe 63, die gegen die feste Backe 61 gedrückt wird, wenn die Steuerfläche 57 in der Einsteckrichtung 29 bewegt wird. Im übrigen ist die Mechanik der Spanneinrichtung 33 nicht dargestellt.

Da der Bewegungsweg der Steuerfläche 57 der Spanneinrichtung 33 bei den für Laser-Einkopplungen zweckmäßigen Abmessungen notwendigerweise nur sehr klein ist, wird mit Vorteil, wie dargestellt, zwischen der Steuerfläche 57 und der Steuer-Anschlagfläche 59 des Steckers 17 ein Federpuffer 65 vorgesehen, und zwar zweckmäßigerweise in dem Laserkopf 1, damit der Stecker 17 möglichst einfach aufgebaut bleiben kann. Bei den dargestellten Ausführungsformen besteht der Federpuffer 65 aus einer den Einsteckpfad des Steckers 17 umgebenden, in der Einsteckrichtung 29 verschiebbaren Betätigungshülse 67 zur Beaufschlagung der Steuerfläche 57 und einer mit der Betätigungshülse 67 in der Einsteckrichtung 29 über eine vorgespannte Feder 69 gekoppelten Zwischenhülse 71, die einen mit der Steuer-Anschlagfläche 59 des Steckers 17 in der Einsteckrichtung 29 zusammenwirkende Gegenfläche 73 aufweist. Zum Vorspannen der Feder 69 dient eine Vorspannhülse 75, die die Betätigungshülse 67 und die Zwischenhülse 71 umschließt, in der Einsteckrichtung 29 verschiebbar in dem Laserkopf 1 gelagert ist und am vorderen Ende einen ringförmigen Boden 77 und am hinteren Ende einen ringförmigen Schraubstopfen 79 aufweist. Das Vorspannen der Feder 69 ist zweckmäßig, um die erforderliche Betätigungskraft über die Feder 69 mit kurzem Betätigungsweg übertragen zu können.

Um ein vorzeitiges Betätigen der Spanneinrichtung 33 zu verhindern, ist der Federpuffer 65 wie dargestellt entgegen der Einsteckrichtung 29 mittels einer Feder 81 beaufschlagt. Die Federkraft dieser Feder 81 ist kleiner als die des Federpuffers ( der vorgespannten Feder 69), so daß die gewünschte Funktion des Federpuffers nicht behindert wird. Bei den dargestellten Ausführungsformen ist die Feder 81 zwischen der Vorspannhülse 75 und dem Laserkopf 1 angeordnet. Falls die Betätigungshülse 67 wie dargestellt, nicht fest mit der Vorspannhülse 75 verbunden ist, bewirkt die Feder 81 auch, daß die Vorspannhülse 75 auch dann in Anlage an der Betätigungshülse 67 bleibt, wenn die vorgespannte Feder 69 in einem letzten Abschnitt des Einsteckvorganges entsprechend der gewünschten Pufferwirkung zusammengedrückt wird (um ein vollständiges Betätigen der Spanneinrichtung 33 sicherzustellen, muß ein überschüssiger Einsteckweg vorhanden sein; dieser wird durch den Federpuffer aufgenommen). Weil somit die Vorspannhülse 75 an der Betätigungshülse 67 gehalten wird, kann ein Sicherheitsschalter 83 zur Betätigung durch die Vorspannhülse 75 angeordnet werden; dies ist baulich bequem. Der Sicherheitsschalter 83 läßt einen Betrieb des Lasers nur dann zu, wenn er betätigt ist (Figur 2 und untere Hälfte der Figur 3), also der Stecker 17 vollständig eingesteckt ist und das Paßstück 21 richtig positioniert ist. Zum Einstellen des Schaltpunktes des Sicherheitsschalters 83 kann zweckmäßigerweise ein verstellbares Schalter-Betätigungsglied 85 vorgesehen sein, bei der Ausführung nach Figur 2 in Form einer auf die Vorspannhülse 75 aufgeschraubten Scheibe, bei der Ausführungsform nach Figur 3 als mehr oder weniger einschraubbares Schaltergehäuse.

Die beschriebene Vorrichtung zeichnet sich insbesondere dadurch aus, daß der Stecker 17 sehr einfach aufgebaut sein kann. Bei den dargestellten Ausführungsformen ist der Stecker 17 rohrförmig und hat ein bequem erfaßbares Griffstück 87. Die Lichtleitfaser 15 ist einfach längs durch den Stecker durchgeführt und im Stecker festgelegt. Wegen der relativen Bewegung von Paßstück 21 und den übrigen Teilen des Steckers 17 ist es zweckmäßig, eine Zugentlastungseinrichtung 89 an dem Paßstück 21 vorzusehen; außerdem ist eine weitere Zugentlastungseinrichtung 91 am hinteren Ende des Steckers vorgesehen. Die Zugentlastungseinrichtungen 89, 91 sind im einfachsten Fall wie angedeutet als Crimpungen ausgeführt, die die KunststoffKabelhülle 93 der Lichtleitfaser 15 ergreifen.

Die Arbeitsweise der dargestellten Vorrichtung ist aus der vorstehenden Beschreibung und den Figuren ohne weiteres erkennbar und wird im folgenden anhand von Figur 3 erläutert. Beim Einstecken des Steckers 17 wird zunächst der in der oberen Hälfte der Figur 3 dargestellte Zustand erreicht, bei dem die Anschlagfläche 23 am vorderen Ende des Paßstücks 21 an der Gegenfläche 25 anliegt. Wenn dann der SteckerHauptteil 55 weiter in Einsteckrichtung 29 bewegt wird, wird über die vorgespannte Feder 69 die Betätigungshülse 67 gegen die Steuerfläche 57 der Spanneinrichtung 33 gedrückt. Dadurch spannt die Spanneinrichtung 33 das Paßstück 21 quer zu der Einsteckrichtung 29 in die richtige Einkopplungsposition. Bei fortgesetztem Einsteckvorgang, bis zum Einrasten der Rasteinrichtung 37, wird dann die Feder 69 zusammengedrückt. Der schließlich erreichte eingerastete Endzustand ist in der unteren Hälfte der Figur 3 dargestellt. Während der Einsteckbewegung wird der Sicherheitsschalter 83 betätigt, wenn die Spanneinrichtung 33 geschlossen wird.

## Ansprüche

1. Laser-Einkopplungsvorrichtung zum Anschließen einer Lichtleitfaser (15) an einen Einkopplungsort (11) eines Laserkopfes (1), dadurch gekennzeichnet, daß die Einkopplungsvorrichtung als Steckverbindung ausgebildet ist, die einen die Lichtleitfaser (15) fassenden Stecker (17) und einen in dem Laserkopf (1) vorgegebenen Einsteckpfad (19) für den Stecker (17) aufweist, daß der Stecker (17) an seinem freien Ende ein genau bemessenes Paßstück (21) aufweist, in dem ein Eintrittsquerschnitt der Lichtleitfaser (15) mit fester Orientierung zu dem Paßstück (21) angeordnet ist, daß zwischen dem Paßstück (21) und dem Einsteckpfad ein zum genauen Positionieren des Paßstücks (21) relativ zu dem Ankopplungsort (11) ausreichendes Spiel vorgesehen ist, und daß der Laserkopf (1) eine durch Einstecken des Steckers (17) betätigbare Spanneinrichtung (33) aufweist, die bei voll eingestecktem Stecker (17) das Paßstück (21) in der richtigen Einkopplungsposition festlegt.

2. Vorrichtung nach Anspruch 1, dadurch gekennzeichnet, daß der Eintrittsquerschnitt in der freien Stirnfläche des Paßstücks (21) vorgesehen ist, daß das Paßstück (21) eine den Eintrittsquerschnitt umgebende ringförmige Anschlagfläche (23) aufweist, die bei voll eingestecktem Stecker (17) die Position des Eintrittsquerschnitts in der Einsteckrichtung (29) bestimmt, und daß die Spannvorrichtung (33) zum Festlegen der Position des Paßstücks (21) quer zu der Einsteckrichtung (29) ausgebildet ist.

3. Vorrichtung nach Anspruch 1 oder 2, dadurch gekennzeichnet, daß an dem Laserkopf (1) und dem Stecker (17) eine Rasteinrichtung (37) vorgesehen ist, die den Stecker (17) in der voll eingesteckten Stellung hält.

4. Vorrichtung nach Anspruch 3, dadurch gekennzeichnet, daß die Rasteinrichtung (37) eine gesondert betätigbare Entrastungseinrichtung (39) aufweist.

5. Vorrichtung nach einem der vorhergehenden Ansprüche, dadurch gekennzeichnet, daß das Paßstück (21) in dem für die Erzielung des Spiels nötigem Ausmaß beweglich an den übrigen Teilen des Steckers (17) gelagert ist.

6. Vorrichtung nach einem der vorhergehenden Ansprüche, dadurch gekennzeichnet, daß das Paßstück (21) entgegen der Einsteckrichtung (29) gegen eine Feder (49) relativ zu den übrigen Teilen des Steckers beweglich ist.

7. Vorrichtung nach Anspruch 6, dadurch gekennzeichnet, daß die Spanneinrichtung (33) eine in der Einsteckrichtung (29) betätigbare Steuerfläche (57) aufweist, und daß die übrigen Teile des Steckers (17) eine damit zusammenwirkende Steuer-Anschlagfläche (59) aufweisen.

8. Vorrichtung nach Anspruch 7, dadurch gekennzeichnet, daß zwischen der Steuerfläche (57) und der Steuer-Anschlagfläche (59) ein Federpuffer (65) vorgesehen ist.

9. Vorrichtung nach Anspruch 8, dadurch gekennzeichnet, daß der Federpuffer (65) in dem Laserkopf (1) vorgesehen ist und eine in der Einsteckrichtung (29) verschiebbare, den Einsteckpfad (19) des Steckers (17) umgebende Betätigungshülse (67) zum Beaufschlagen der Steuerfläche (57) und eine mit der Betätigungshülse (67) in der Einsteckrichtung (29) über eine vorgespannte Feder (69) gekoppelte, mit der Steuer-Anschlagfläche (59) zusammenwirkende Zwischenhülse (71) aufweist, und daß die Betätigungshülse (67) und die Zwischenhülse (71) von einer in der Einsteckrichtung (29) verschiebbaren Vorspannhülse (75) gegen die vorgespannte Feder (69) abgestützt sind.

10. Vorrichtung nach Anspruch 9, dadurch gekennzeichnet, daß die Vorspannhülse (75) gegen die Einsteckrichtung (29) von einer Feder (81) beaufschlagt ist, deren Kraft kleiner als die des Federpuffers (65) ist.

11. Vorrichtung nach einem der vorhergehendem Ansprüche, gekennzeichnet durch einen mit der Betätigung der Spanneinrichtung (33) gekoppelten Sicherheitsschalter (83).

12. Vorrichtung nach den Ansprüchen 10 und 11, dadurch gekennzeichnet, daß der Sicherheitsschalter (83) in Abhängigkeit von der Position der Vorspannhülse (75) betätigbar ist.

13. Vorrichtung nach Anspruch 12, dadurch gekennzeichnet, daß zum Einstellen des Schaltpunktes des Sicherheitsschalters (83) ein verstellbares Schalter-Betätigungsglied (85) vorgesehen ist.

14. Vorrichtung nach einem der vorhergehenden Ansprüche, dadurch gekennzeichnet, daß die Spanneinrichtung (33) quer zu der optischen Achse (9) in zwei Koordinatenrichtungen justierbar ist.

15. Lichtleitfaser-Stecker zum Einstecken in einen Laserkopf, gekennzeichnet durch die in einem der vorhergehenden Ansprüche beschriebenen Merkmale des Steckers.

## Fig. 1

## Fig. 3

EP 0 296 467 A2

Fig. 2